(19) Europäisches Patentamt
European Patent Office
Office européen des brevets

(11) EP 1 128 160 A1

(12) **DEMANDE DE BREVET EUROPEEN**

(43) Date de publication:
**29.08.2001 Bulletin 2001/35**

(51) Int Cl.[7]: **G01B 11/30**, G01N 21/21

(21) Numéro de dépôt: **01400291.9**

(22) Date de dépôt: **06.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **22.02.2000 FR 0002189**

(71) Demandeur: **THOMSON-CSF**
**75008 Paris (FR)**

(72) Inventeurs:
- **Le Hors, Lenaic, Thomson-CSF Propriete 94117 Arcueil Cedex (FR)**
- **Breugnot, Sébastien, Thomson-CSF Propriete 94117 Arcueil Cedex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(54) **Dispositif de contrôle de l'état d'une surface**

(57) L'invention concerne un dispositif de contrôle de l'état d'une surface, et s'applique plus particulièrement au contrôle sans contact, en temps réel, des défauts de surface sur des matériaux diffusants de type revêtements de peinture, peau, etc. Selon un exemple de réalisation, le dispositif comprend :

- des moyens d'émission (SRC) d'une onde d'illumination ($W(\lambda)$) de ladite surface à une longueur d'onde de travail ($\lambda$) donnée fortement absorbée par ledit matériau,
- des moyens de polarisation (PSG) de ladite onde permettant de générer une onde d'illumination polarisée ($W_{pol}(\lambda)$) de ladite surface, de polarisation prédéterminée,
- des moyens d'analyse de la polarisation (PSA) selon deux états orthogonaux de l'onde rétrodiffusée par ladite surface, permettant de former deux signaux $W_1(\lambda)$ et $W_2(\lambda)$ caractéristiques des deux états orthogonaux,
- des moyens de détection (MDET) recevant lesdits signaux $W_1(\lambda)$ et $W_2(\lambda)$ pour former deux images correspondantes $I_{//}(\lambda)$ et $I_{\perp}(\lambda)$ de ladite surface,
- des moyens de codage calculant une image codée en degré de polarisation, obtenu par le calcul du rapport $\frac{I_{//}(\lambda)-I_{\perp}(\lambda)}{I_{//}(\lambda)+I_{\perp}(\lambda)}$, mettant en évidence les défauts de ladite surface correspondant à des zones de l'image de plus faible degré de polarisation.

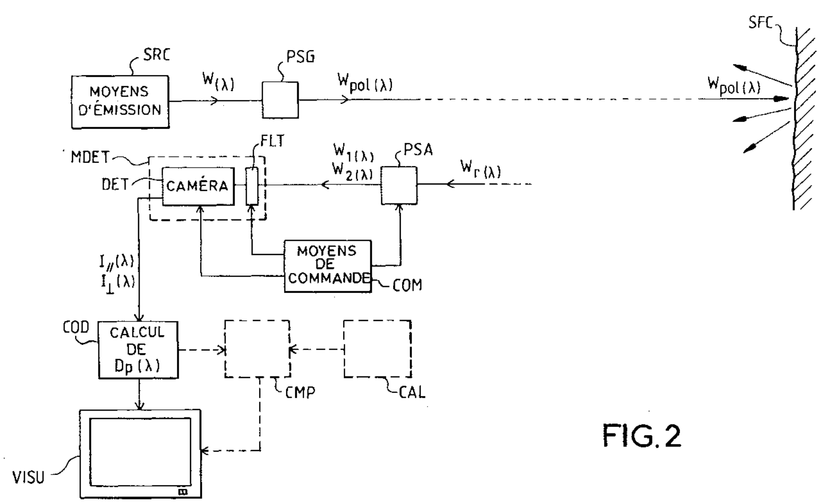


FIG. 2

EP 1 128 160 A1

## Description

L'invention concerne un dispositif de contrôle de l'état d'une surface, et s'applique plus particulièrement au contrôle sans contact, en temps réel, des défauts de surface, de type rayures, et autre type d'aspérités, sur des matériaux diffusants de type revêtements de peinture, peau, etc.

Le contrôle de défauts de surface sans contact revêt une importance particulière dans de nombreux domaines de l'industrie, comme par exemple dans l'industrie automobile ou aéronautique pour le contrôle de la qualité des peintures. Dans un tout autre type d'industrie, l'industrie cosmétologique, on peut être amené également à qualifier la performance de produits cosmétologiques sur la peau, les ongles, les cheveux, en pratiquant des tests de contrôle de surface. Il est particulièrement intéressant de pouvoir procéder à ces tests sur des sujets vivants, en temps réel, plutôt que de travailler sur photos par exemple, afin d'obtenir des résultats évolutifs en fonction du temps sur la qualité de ce type de produits.

Outre les techniques de contrôle avec contact, par exemple au moyen du déplacement d'une aiguille sur un échantillon test pour le contrôle de revêtements, il existe un certain nombre de techniques de contrôle sans contact. Par exemple, des techniques optiques, basées sur le déplacement d'un faisceau lumineux focalisé sur la surface. Un inconvénient de ces techniques réside dans le fait qu'elles ne permettent pas d'établir une image instantanée de la surface mettant en évidence les défauts, l'obtention de ces images pouvant être particulièrement intéressante dans certaines applications, comme par exemple dans le contrôle en cosmétologie.

L'invention présente un dispositif de contrôle de surface également basé sur l'étude de la polarisation d'une onde d'illumination de la surface, mais qui permet de donner une image précise des défauts de la surface par une technique simple et rapide, permettant en outre un contrôle en temps réel. Le dispositif selon l'invention permet également selon une variante, d'étudier la brillance de la surface, en en donnant une information quantitative.

Pour cela, le dispositif selon l'invention est basé sur une mesure du degré de polarisation, à des longueurs d'onde spécifiques qui dépendent notamment du matériau dont est formée la surface que l'on cherche à contrôler.

Plus précisément, l'invention concerne un dispositif de contrôle de l'état d'une surface d'un matériau diffusant, caractérisé en ce qu'il comprend :

- des moyens d'émission d'au moins une onde d'illumination de ladite surface à une longueur d'onde de travail donnée, l'une au moins desdites longueurs d'onde étant fortement absorbée par ledit matériau,
- des moyens de polarisation de ladite onde permettant de générer une onde d'illumination polarisée de ladite surface, de polarisation prédéterminée, ou bien deux ondes d'illumination polarisées de ladite surface, de polarisations prédéterminées selon deux états de polarisation orthogonaux,
- des moyens d'analyse de la polarisation selon deux états orthogonaux, pour chacune desdites longueurs d'onde de travail, de l'onde ou des deux ondes rétrodiffusée(s) par ladite surface, permettant de former deux signaux $W_1(\lambda)$ et $W_2(\lambda)$ caractéristiques des deux états orthogonaux,
- des moyens de détection recevant lesdits signaux $W_1(\lambda)$ et $W_2(\lambda)$ pour former deux images correspondantes $I_{//}(\lambda)$ et $I_{\perp}(\lambda)$ de ladite surface à ladite longueur d'onde de travail,
- des moyens de codage calculant au moins à ladite longueur d'onde de travail fortement absorbée, une image codée en degré de polarisation, obtenue par le calcul du rapport

$$\frac{I_{//}(\lambda)-I_{\perp}(\lambda)}{I_{//}(\lambda)-I_{\perp}(\lambda)},$$

mettant en évidence les défauts de ladite surface correspondant à des zones de l'image de plus faible degré de polarisation.

Avantageusement, le degré de polarisation mesuré est le degré de polarisation linéaire (en choisissant des ondes d'illumination polarisées linéairement), ou circulaire (en choisissant des ondes d'illumination polarisées circulairement). En travaillant avec une source d'émission dans le domaine visible, on peut notamment étudier les défauts de la peau, des ongles ou des cheveux pour l'industrie cosmétologique et, selon une variante, leur brillance.

D'autres avantages et caractéristiques de l'invention apparaîtront à la lecture de la description qui suit, illustrée par les figures annexées qui représentent :

- les figures 1A et 1B, des schémas illustrant dans un exemple d'application, le choix de la longueur d'onde de travail;
- la figure 2, le schéma de principe d'un exemple de réalisation du dispositif selon l'invention.

Le dispositif de contrôle de l'état de surface selon l'invention est basé sur un codage en degré de polarisation

de l'image de la surface. Pour cela, il s'agit par exemple d'éclairer la surface par une onde d'illumination polarisée dont la polarisation est parfaitement connue. On mesure alors au niveau du système de détection, et selon deux composantes orthogonales, la polarisation de l'onde rétrodiffusée. Les deux images obtenues sont traitées pour obtenir une image codée par une variable qui représente le degré de polarisation, et dont la valeur est comprise entre 0 et 1. Il vaut 1 lorsque la lumière détectée a conservé l'état de polarisation incident, il vaut 0 lorsque la polarisation a été totalement perdue entre l'émission et la détection.

Un aspect de la technique de codage d'une image en degré de polarisation est développé dans le brevet FR 9713032 intitulé 'Dispositif d'imagerie par polarimétrie'. Dans ce brevet, on cherche à améliorer la distinction d'objets formant une scène éloignée. Cette distinction se fait sur la capacité qu'ont les différents objets à dépolariser la lumière incidente, et qui dépend notamment de la rugosité de l'objet. Ainsi, des objets faits par l'homme dépolarisent en général moins que des objets naturels. Pour connaître les propriétés de polarimétrie associées à la rétrodiffusion d'un objet, il est connu de mesurer une matrice à 16 coefficients connue sous le nom de matrice de Mueller. Dans le brevet FR 9713032, on montre que le nombre de mesures peut être réduit à 2 en exploitant le fait que cette matrice soit diagonale dans certains cas. On montre alors que l'envoi de deux ondes d'illumination polarisées elliptiquement, avec une polarisation choisie, permet de mesurer le degré de polarisation $D_p(M)$ des objets formant la scène, où M est la matrice de Mueller associé à l'objet, le degré de polarisation étant défini sous sa forme générale de la façon suivante :

$$D_p(M) = 100.\sqrt{\frac{\sum_{i=0}^{i=3}\sum_{j=0}^{j=3} m_{ij}^2 - m_{00}^2}{3.m_{00}^2}} \qquad (1)$$

où $m_{ij}$ représente un élément de la matrice de Mueller M.

Ainsi, on obtient une image de la scène avec un contraste amélioré entre les différents objets de natures différentes.

L'invention utilise un autre paramètre jusque là non exploité dans l'imagerie par polarimétrie, à savoir la longueur d'onde. Dans le contrôle de l'état d'une surface, la déposante a en effet démontré qu'en choisissant une longueur d'onde spécifique du matériau dont est formée la surface, une image codée en degré de polarisation à cette longueur d'onde permet de mettre en évidence les défauts de la surface, telles que les rayures, ou tout autre type d'aspérités. Par ailleurs, la déposante a montré que des résultats satisfaisants peuvent être obtenus en travaillant soit sur le degré de polarisation linéaire, soit sur le degré de polarisation circulaire (ces grandeurs seront définies par la suite), soit encore sur le degré de polarisation total tel qu'il est défini par la l'équation (1).

Les figures 1A et 1B illustrent dans un exemple d'application, le choix de la longueur d'onde de travail du dispositif selon l'invention. Il s'agit ici par exemple, d'étudier les défauts d'une surface recouverte d'un revêtement de peinture. La déposante a montré qu'il est bien plus intéressant de travailler dans une bande spectrale où le matériau est le plus absorbant, car en effet, les effets de diffusion de surface sont alors mis en valeur par rapport aux effets de diffusion de volume. Les figures 1A et 1B illustrent cet effet ; il s'agit ici par exemple d'une surface recouverte d'une peinture rouge. Si cette surface est éclairée, comme sur la figure 1A, avec un éclairage bleu fortement absorbé, l'onde pénètre très peu dans le volume du matériau. Ainsi, sur les surfaces sensiblement planes (référence 1 sur la figure 1A), elle subit une réflexion de surface (peu d'interactions avec les particules du matériau) et est très peu dépolarisée. L'indicatrice de diffusion DIF forme dans ce cas un lobe étroit. Par contre, au niveau des défauts (référence 2 sur la figure 1A), l'onde incidente subit de multiples réflexions et ressort complètement dépolarisée. Maintenant, si la surface est éclairée, comme sur la figure 1B, avec un éclairage rouge peu absorbé, l'onde pénètre dans le volume du matériau où elle subit de nombreuses interactions avec les particules du matériau et ressort dépolarisée quel que soit l'état de surface (références 1 et 2 sur la figure 1B). Il s'agit dans ce cas de diffusion de volume sensiblement isotrope. On ne retire donc pas d'informations sur l'état de surface. Ainsi, comme c'est le cas dans l'exemple des figures 1A et 1B, il sera intéressant d'observer l'image 'bleue' d'une peinture rouge car elle recèlera bien plus d'informations en ce qui concerne l'état de surface. Dans une autre application telle que celle de l'industrie cosmétologique, il sera également intéressant de travailler dans le bleu, car cette longueur d'onde est fortement absorbée par la peau, tandis qu'une onde de longueur d'onde rouge subira principalement, comme dans l'exemple de la figure 1B, de la diffusion de volume.

La figure 2 représente un schéma de principe d'un exemple de réalisation du dispositif selon l'invention. Dans cet exemple, le dispositif comprend notamment des moyens d'émission SRC d'une onde d'illumination W(λ) d'une surface SFC à contrôler, à une longueur d'onde λ de travail, cette longueur d'onde étant fortement absorbée par la surface. Par 'fortement' absorbée, on entend que l'onde à ladite longueur d'onde pénètre peu dans le matériau. Ainsi, l'onde détectable diffusée par le matériau n'a subi que très peu d'interactions avec les particules du matériau et reste

polarisée. En pratique, on peut procéder à la mesure d'un spectre en reflectance, en éclairant la surface en incidence oblique (par exemple 45°) et en observant l'onde réfléchie dans la direction d'illumination, de telle sorte à sortir du lobe de diffusion de surface. Les longueurs d'onde pour lesquelles on observe un fort signal sont celles qui présentent une forte diffusion de volume (isotrope), tandis que les longueurs d'onde pour lesquelles le signal est minimum sont celles qui présentent le moins de diffusion de volume et qui sont donc les plus adaptées à notre application.

Le dispositif comprend en outre des moyens de polarisation PSG de l'onde W(λ) permettant de générer une onde d'illumination polarisée $W_{pol}(\lambda)$ de la surface, de polarisation prédéterminée et des moyens d'analyse de la polarisation PSA selon deux états orthogonaux de l'onde $W_r(\lambda)$ rétrodiffusée par la surface, permettant ainsi de former deux signaux $W_1(\lambda)$ et $W_2(\lambda)$ caractéristiques des deux états orthogonaux, et des moyens de détection MDET qui détectent les intensités des signaux $W_1(\lambda)$ et $W_2(\lambda)$ pour former deux images correspondantes $I_{//}(\lambda)$ et $I_{\perp}(\lambda)$ de la surface, telles que le rapport

$$\frac{I_{//}(\lambda)-I_{\perp}(\lambda)}{I_{//}(\lambda)-I_{\perp}(\lambda)}$$

corresponde sensiblement à un degré de polarisation de la surface à la longueur d'onde de travail λ. Le dispositif comprend d'autre part des moyens de codage calculant une image codée en degré de polarisation, obtenue par le calcul du rapport

$$\frac{I_{//}(\lambda)-I_{\perp}(\lambda)}{I_{//}(\lambda)-I_{\perp}(\lambda)}.$$

L'image codée ainsi obtenue met en évidence les défauts de la surface, ces défauts apparaissant sur l'image codée, visible pour un utilisateur par exemple au moyen d'un système de visualisation VISU, selon des zones de plus faible degré de polarisation, par exemple représentées selon des zones plus sombres.

Pour mieux comprendre le principe de l'invention, nous expliquons ici succinctement le principe de la mesure du degré de polarisation de la surface. Le formalisme de Stokes permet la représentation de la lumière partiellement polarisée suivant un vecteur à quatre dimensions S = [I, Q, U, V], où I est l'intensité totale du champ électrique de l'onde, Q est la différence des intensités respectivement suivant les polarisations verticale et horizontale, U est la différence des intensités respectivement suivant la polarisation à 45° (par rapport à l'axe horizontal) et la polarisation à 135°, V est la différence des intensités respectivement suivant la polarisation circulaire droite et la polarisation circulaire gauche. L'interaction d'une onde lumineuse avec la surface de matériau donné se traduit par une modification de son état de polarisation. La matrice de Mueller, propre à chaque matériau, permet de décrire cette interaction par une simple multiplication du vecteur de Stokes incident avec la matrice de Mueller de la surface. Ainsi, le vecteur de Stokes $S_{DET}$ détecté par les moyens de détection (MDET sur la figure 1), après rétrodiffusion sur la surface SFC, s'écrit comme le produit du vecteur de Stokes $S_{SRC}$ de l'onde d'illumination (W(λ)) par les matrices de Mueller des différents éléments présents sur le chemin de l'onde :

$$S_{DET} = M_{PSA}.M_{SFC}.M_{PSG}.S_{SRC}$$

où $M_{PSG}$, $M_{SFC}$, et $M_{PSA}$ désignent respectivement les matrices de Mueller des moyens de polarisation PSG, de la surface SFC et des moyens d'analyse de la polarisation PSA. Dans une configuration quasi monostatique, c'est à dire pour laquelle la direction d'observation de l'onde rétrodiffusée est proche de celle de l'onde d'illumination de la surface, la déposante a montré en outre que les matrices de Mueller des matériaux courants, pour des raisons de symétrie, sont diagonales et peuvent sensiblement s'écrire sous la forme :

$$M_{SFC}(\lambda) = M_{00}(\lambda)\begin{bmatrix} 1 & 0 & 0 & 0 \\ 0 & D_{p,l}(\lambda) & 0 & 0 \\ 0 & 0 & D_{p,l}(\lambda) & 0 \\ 0 & 0 & 0 & D_{p,c}(\lambda) \end{bmatrix} \qquad (2)$$

où $M_{00}(\lambda)$ est le coefficient de rétroréflexion dans la direction d'observation considérée, $D_{p,l}(\lambda)$ est le degré de

polarisation linéaire, $D_{p,c}(\lambda)$ est le degré de polarisation circulaire.

Notons $S_{in}$ = [I, Q, U, V] le vecteur de Stokes de l'onde $W_{pol}(\lambda)$ incidente sur la surface (à la sortie des moyens de polarisation PSG). Après interaction avec la surface, on analyse le vecteur de Stokes de l'onde rétrodiffusée grâce aux moyens d'analyse de la polarisation dont les caractéristiques sont liées à celles des moyens de polarisation afin de former les deux signaux $W_1(\lambda)$ et $W_2(\lambda)$ caractéristiques des deux états orthogonaux.

Dans l'exemple de la figure 2, on choisit de n'envoyer, pour chaque longueur d'onde de travail, qu'une seule onde polarisée. Ainsi, les moyens de polarisation PSG génèrent une seule onde polarisée $W_{pol}(\lambda)$, par exemple grâce à une lame d'onde précédée d'un polariseur, et les moyens d'analyse PSA comprennent par exemple un analyseur, formé d'une lame d'onde de même nature que celle des moyens de polarisation, et qui prend deux positions, parallèle ou croisée par rapport à la lame d'onde des moyens de polarisation PSG, pour former les deux signaux $W_1(\lambda)$ et $W_2(\lambda)$. Ces deux signaux sont caractérisés respectivement par les deux vecteurs de Stokes $S_1 = [I_1, U_1, Q_1, V_1]$ et $S_2 = [I_2, U_2, Q_2, V_2]$ et sont envoyés par les moyens de détection MDET qui ne donnent accès qu'aux intensités $I_1$ et $I_2$, notés respectivement $I_{//}(\lambda)$ et $I_{\perp}(\lambda)$. Ces deux intensités sont des combinaisons des coefficients de la matrice de Mueller associée à la surface, et dépendent évidemment du choix de l'état de polarisation incident. On obtient alors un système de deux équations qui permet, si l'état de polarisation incident a été bien choisi, de remonter soit au degré de polarisation linéaire $D_{p,l}(\lambda)$, soit au degré de polarisation circulaire $D_{p,c}(\lambda)$, soit à un degré de polarisation $D_p(\lambda)$, combinaison linéaire des degrés de polarisation linéaire et circulaire, et appelé par la suite degré de polarisation total. Ainsi, par la mesure des deux intensités $I_{//}(\lambda)$ et $I_{\perp}(\lambda)$, on parvient à déterminer un des degrés de polarisation de la surface. Dans l'exemple de la figure 2, les moyens de détection sont positionnés à proximité des moyens d'émission de telle sorte que l'on est dans une configuration monostatique, rendant la mesure des degrés de polarisation indépendante des conditions d'éclairage.

Dans le cas général, la mesure du degré de polarisation linéaire est suffisante pour étudier les défauts de surface. Dans l'exemple de la figure 2, les moyens de polarisation PSG sont alors formés d'un simple polariseur rectiligne, par exemple d'axe vertical, et les moyens d'analyse PSA comprennent par exemple, associé à un polariseur rectiligne, un rotateur de polarisation, mécanique ou à cristaux liquide, qui permet de mesurer alternativement la composante verticale (ou parallèle) et horizontale (ou croisée) de l'onde rétrodiffusée. Dans l'exemple de la figure 2, les moyens de détection MDET comprennent un détecteur DET de type caméra et des moyens de commande COM qui pilotent le rotateur de polarisation pour sélectionner l'un ou l'autre des signaux $W_1(\lambda)$ ou $W_2(\lambda)$ caractéristiques respectivement des deux états de polarisation parallèle ou croisé, ainsi que la caméra, afin de contrôler l'acquisition d'une image selon cet état (respectivement $I_{//}(\lambda)$ ou $I_{\perp}(\lambda)$. En utilisant le formalisme de Stokes précédemment décrit, on montre alors que le rapport

$$\frac{I_{//}(\lambda)-I_{\perp}(\lambda)}{I_{//}(\lambda)-I_{\perp}(\lambda)}$$

mesuré est égal au degré de polarisation linéaire $D_{p,l}(\lambda)$ de la surface. Les moyens de commande COM, ainsi que les moyens de codage qui calculent l'image codée en degré de polarisation sont par exemple assurés par un micro-ordinateur, puis l'image est affichée sur un écran.

Le rotateur de polarisation peut être remplacé par un cube séparateur de polarisation, dont chacune des voies mesure un des états orthogonaux de polarisation. Dans ce cas, les moyens de détection comprennent deux détecteurs, par exemple deux caméras, placées chacune sur une voie. L'avantage de cette solution est de pouvoir réaliser simultanément l'acquisition des deux images, ce qui élimine les problèmes de reproductibilité de la puissance émise par les moyens d'émission, par exemple dans le cas de l'utilisation d'une lampe flash émettant des impulsions. Cependant, la calibration des deux voies reste très délicate en imagerie.

Dans certaines applications spécifiques, il est possible que la mesure du degré de polarisation circulaire ou du degré de polarisation total soit mieux adaptée et donne de meilleurs résultats en terme de précision dans le contrôle des défauts de surface. Ainsi par exemple, pour les applications en milieu aqueux, on travaillera préférentiellement sur la mesure du degré de polarisation circulaire car la polarisation circulaire est mieux conservée en cours de propagation. Dans ce cas, et en reprenant l'exemple de la figure 2, les moyens de polarisation génèrent une onde polarisée circulairement, par exemple au moyen d'un polariseur rectiligne suivi d'une lame à retard, en l'occurrence une lame lambda/4. Les moyens d'analyse PSA peuvent être formés, comme dans l'exemple précédent, d'un analyseur de polarisation commandé par des moyens de commande COM et formés dans cet exemple d'un polariseur rectiligne, d'axe alternativement parallèle ou perpendiculaire à celui de la lame formant les moyens de polarisation PSG, précédé d'une lame lambda/4 dont l'axe rapide est parallèle à l'axe rapide de la lame formant les moyens de polarisation PSG. On obtient ainsi alternativement les deux signaux $W_1(\lambda)$ et $W_2(\lambda)$ dont les intensités respectives $I_{//}(\lambda)$ et $I_{\perp}(\lambda)$ permettent de mesurer le degré de polarisation circulaire.

Le degré de polarisation total de la surface est, suivant la relation (1) qui se simplifie dans le cas d'une matrice

de Mueller diagonale du type de celle de l'équation (2), une combinaison des degrés de polarisation linéaire et circulaire. On peut l'obtenir par une mesure au préalable de ces deux coefficients. Mais il est préférable de le mesurer directement. Pour cela, la déposante a montré que la polarisation de l'onde d'illumination polarisée $W_{pol}(\lambda)$ doit être elliptique, le vecteur de Stokes associé cette onde étant sensiblement le suivant:

$$S = \begin{pmatrix} 1 \\ 1/\sqrt{3} \\ 1/\sqrt{3} \\ 1/\sqrt{3} \end{pmatrix} \qquad (3)$$

à un facteur scalaire près, et par une matrice de rotation près autour de l'axe (Oz) de propagation de l'onde.

Cette onde est par exemple obtenue par des moyens de polarisation PSG comprenant un polariseur rectiligne, par exemple d'axe vertical et une lame à retard de type lambda/8 dont l'axe rapide fait sensiblement un angle de -27,8° avec ledit axe vertical, le sens positif étant le sens trigonométrique. Les moyens d'analyse de la polarisation PSA sont formés, par exemple, d'une lame à retard de type lambda/8 commandée par les moyens de commande et dont l'axe rapide fait sensiblement alternativement un angle de 62,5° ou 152,5° avec l'axe vertical, le sens positif étant le sens trigonométrique, suivi d'un polariseur rectiligne d'axe vertical.

Selon une variante différente de celle de la figure 2, on peut choisir d'envoyer, pour chaque longueur d'onde de travail, deux ondes polarisées. Dans ce cas, les moyens de polarisation PSG génèrent pour chaque onde d'illumination W(λ), deux ondes d'illumination polarisées, de polarisations déterminées selon deux états de polarisation orthogonaux. Il s'agit de deux ondes polarisées linéairement, selon deux directions orthogonales, pour une mesure du degré de polarisation linéaire, de deux ondes polarisées circulairement, respectivement gauche et droite, pour une mesure du degré de polarisation circulaire, et de deux ondes polarisées elliptiquement pour une mesure du degré de polarisation total, le vecteur de Stokes associé à l'une des ondes étant donné par la relation (3). Les moyens de polarisation PSG sont formés par exemple d'un polariseur, suivi d'un rotateur de polarisation ou d'une lame à retard, ces deux éléments pouvant être commandés par des moyens de commande pour générer les deux états de polarisation choisis. Comme dans la première variante (figure 2), les moyens d'analyse de la polarisation sont adaptés aux moyens de polarisation PSG pour former les deux signaux $W_1(\lambda)$ et $W_2(\lambda)$, correspondant respectivement aux deux ondes rétrodiffusées par la surface SFC, et d'intensités respectives $I_{//}(\lambda)$ et $I_{\perp}(\lambda)$ telles que le rapport

$$\frac{I_{//}(\lambda)-I_{\perp}(\lambda)}{I_{//}(\lambda)-I_{\perp}(\lambda)}$$

donne le degré de polarisation recherché. Les moyens de détection comprennent par exemple une caméra, recevant successivement les deux signaux, pilotée également par les moyens de commande qui contrôlent l'acquisition d'une image selon chacun des états de polarisation. un inconvénient de cette variante réside dans le fait que si l'on veut utiliser des moyens de polarisation commandés en tension, de type rotateurs de polarisation à cristaux liquides, ils doivent être placés sur le parcours de l'onde d'illumination, dont l'intensité lumineuse est importante par rapport à celle de l'onde rétrodiffusée par la surface. Or ces éléments ont une résistance au flux lumineux assez faible, qui entraînera une limitation du flux de l'onde d'illumination. D'autre part, la mesure est sensible aux variations d'intensité de la source, la détection des deux signaux $W_1(\lambda)$ et $W_2(\lambda)$ ne pouvant se faire simultanément.

Dans les exemples abordés jusqu'à présent, on s'est intéressé à l'émission d'une onde d'illumination à une seule longueur d'onde de travail, cette longueur d'onde devant être adaptée, comme cela a été expliqué, au matériau dont est faite la surface dont on cherche à contrôler l'état. Les moyens d'émission SRC peuvent être alors formés d'une source monoraie, de type laser, continu ou impulsionnel, ou d'une source blanche avec un filtre interférentiel. Dans la plupart des applications cependant, une plus grande richesse d'informations est obtenue en travaillant à différentes longueurs d'onde, la dépolarisation dépendant, comme nous l'avons vu, de la longueur d'onde. Les moyens d'émission sont alors généralement choisis en fonction de la portée du dispositif que l'on recherche. Ainsi, l'utilisation d'un laser accordable ou multiraies est bien adaptée pour les applications de grande portée. L'utilisation d'une lampe flash est envisageable pour une surface placée à distance moyenne (quelques mètres à quelques dizaines de mètres). Son utilisation peut également être recommandée pour éviter un éblouissement dans le cas d'applications médicales, pour lesquelles un flash lumineux court sera plus supportable pour un patient qu'un éclairement continu. Un simple projecteur (lumière blanche) permet d'illuminer une surface proche et de fournir un spectre large pour l'analyse multispectrale. Dans certains type d'applications, le choix d'une lampe fibrée (au moyen d'une fibre optique), permet d'approcher la source de la surface à étudier, et ainsi de prendre des images rapprochées. Ce système s'avère très utile dans le cas d'applications dermatologiques ou cosmétiques (étude de l'état de surface de la peau, d'un ongle, d'un cheveu).

Dans le cas de l'utilisation de moyens d'émission comprenant une source émettant dans une bande spectrale large, on utilise avantageusement des moyens de polarisation PSG et d'analyse de la polarisation PSA sensiblement achrorriatiques sur la bande spectrale choisie. L'utilisation de matériaux biréfringents dans les différents éléments de polarisation permet d'obtenir de manière connue ce caractère d'achromaticité. Il est cependant à noter que dans ce cas, l'utilisation de d'ondes polarisées linéairement ou circulairement est plus simple, car on trouvera plus facilement dans le commerce des éléments de polarisation achromatiques pour ce type de polarisation, du moins sur certaines bandes spectrales.

Ce sont ensuite les moyens de détection qui peuvent permettre de sélectionner les longueurs d'onde de travail. Par exemple, lorsque la bande spectrale est dans le spectre visible, les moyens de détection MDET peuvent comprendre des détecteurs de type caméra vidéo RGB, donnant six images correspondant, pour chacune des longueurs d'onde rouge, vert et bleu, aux deux états de polarisation orthogonaux. Il peut également s'agir, comme dans l'exemple de la figure 2, de détecteurs DET de type caméra vidéo monochrome, les moyens de détection MDET comprenant alors des moyens de filtrage FLT en longueur d'onde commandables par des moyens de commande, dans cet exemple les moyens COM qui permettent également de piloter la caméra et les moyens d'analyse de la polarisation, et permettant de sélectionner la couleur à laquelle on souhaite faire la mesure. Bien entendu, les moyens de filtrage FLT peuvent être également placés en amont des moyens de détection. Les moyens de codage calculent alors pour chaque longueur d'onde, une image codée en degré de polarisation, comme cela a été expliqué précédemment. On obtient ainsi une caractérisation très fine et rapide des défauts de surface, en choisissant la ou les longueurs d'onde appropriées. Par exemple, en ce qui concerne les applications cosmétologiques, on peut visualiser directement, en temps réel, l'effet d'une crème antirides sur un visage. On peut par ailleurs combiner les images codées obtenues à différentes longueurs d'onde, par exemples en les sommant, pour faire apparaître d'autres caractéristiques de la surface.

Dans le cas d'applications dermatologiques ou cosmétologiques, on peut aussi, avec le dispositif selon l'invention, déterminer en plus des défauts de surface, la brillance de la surface, c'est à dire obtenir une caractérisation quantifiable de la réflexion spéculaire visible par l'oeil de la surface. En effet, si une ou plusieurs longueurs d'onde de travail sont dans le spectre visible, l'image codée obtenue par le calcul du degré de polarisation à l'une de ces longueurs d'onde ou l'image codée obtenue par la somme des degrés de polarisation calculés auxdites longueurs d'onde, met en évidence la brillance de la surface. En effet, comme cela a été expliqué précédemment, lorsque la lumière rencontre un objet, une partie de l'énergie est diffusée en surface, après une brève interaction avec le milieu, et conserve alors la plupart des propriétés de polarisation de l'onde incidente. L'autre partie de l'énergie pénètre dans le matériau ; elle subit alors de multiples interactions avant d'être diffusée vers l'extérieur. L'onde émergente est alors complètement dépolarisée et l'indicatrice de son intensité est lambertienne (diffusion isotrope). Ainsi, les zones de l'image codée de plus fort degré de polarisation vont correspondre notamment aux zones de plus grande brillance de la surface aux longueurs d'onde de travail utilisées pour obtenir l'image codée, c'est à dire pour lesquelles prédomine une diffusion de surface qui donne un aspect brillant, métallique, recherché par exemple pour des produits de type vernis à ongles, rouge-à-lèvres, produits pour l'éclat des cheveux. Au contraire, les zones de l'image codée de plus faible degré de polarisation sont caractéristiques de zones où prédomine une diffusion de volume, qui se traduit par un effet mat, effet recherché pour la plupart des crèmes de visage ou maquillage, par exemple.

Selon une variante, on peut travailler pour la caractérisation de la brillance, avec des moyens d'émission émettant dans une large bande spectrale, par exemple en lumière blanche, puis utiliser des moyens de détection qui intègrent sur toute la bande spectrale (par exemple une caméra noir et blanc). On obtient ainsi directement une image codée en degré de polarisation qui donne une caractérisation de la brillance intégrée sur tout le spectre.

Grâce au dispositif selon l'invention, il est possible également d'obtenir une information quantitative de la brillance. Par exemple, comme cela est schématisé en pointillé sur la figure 2, le dispositif selon l'invention comprend en outre des moyens de comparaison CMP des valeurs du degré de polarisation de chaque point de l'image codée à des valeurs de degré de polarisation d'une table de calibration CAL préalablement établie. Cela permet par exemple une caractérisation objective et rapide de l'effet d'un produit cosmétique sur la brillance d'un objet, tel que le visage, la chevelure, ou bien les ongles. Ainsi, une mesure sur un visage par exemple, permet de localiser les zones de forte brillance, et donc de mesurer in vivo l'influence d'un maquillage sur les propriétés diffusantes de la peau. Outre l'obtention d'images exploitables pour travailler sur la qualité des produits, ces mesures quantitatives et en temps réel, ouvrent de nombreuses applications, comme par exemple la rectification automatique de photographies.

## Revendications

**1.** Dispositif de contrôle de l'état d'une surface (SFC) d'un matériau diffusant, caractérisé en ce qu'il comprend

- des moyens d'émission (SRC) d'au moins une onde d'illumination ($W(\lambda)$) de ladite surface à une longueur d'onde de travail ($\lambda$) donnée, l'une au moins desdites longueurs d'onde étant fortement absorbée par ledit matériau,
- des moyens de polarisation (PSG) de ladite onde permettant de générer une onde d'illumination polarisée ($W_{pol}(\lambda)$) de ladite surface, de polarisation prédéterminée, ou bien deux ondes d'illumination polarisées de ladite surface, de polarisations prédéterminées selon deux états de polarisation orthogonaux,
- des moyens d'analyse de la polarisation (PSA) selon deux états orthogonaux, pour chacune desdites longueurs d'onde de travail, de l'onde ou des deux ondes rétrodiffusée(s) par ladite surface, permettant de former deux signaux $W_1(\lambda)$ et $W_2(\lambda)$ caractéristiques des deux états orthogonaux,
- des moyens de détection (MDET) recevant lesdits signaux $W_1(\lambda)$ et $W_2(\lambda)$ pour former deux images correspondantes $I_{//}(\lambda)$ et $I_{\perp}(\lambda)$ de ladite surface à ladite longueur d'onde de travail,
- des moyens de codage calculant au moins à ladite longueur d'onde de travail fortement absorbée, une image codée en degré de polarisation, obtenue par le calcul du rapport

$$\frac{I_{//}(\lambda)-I_{\perp}(\lambda)}{I_{//}(\lambda)-I_{\perp}(\lambda)},$$

  mettant en évidence les défauts de ladite surface correspondant à des zones de l'image de plus faible degré de polarisation.

**2.** Dispositif selon la revendication 1, caractérisé en ce que la polarisation de l'onde ou des ondes d'illumination polarisée(s) est linéaire, le rapport

$$\frac{I_{//}(\lambda)-I_{\perp}(\lambda)}{I_{//}(\lambda)-I_{\perp}(\lambda)}$$

étant alors sensiblement le degré de polarisation linéaire de ladite surface.

**3.** Dispositif selon la revendication 1, caractérisé en ce que la polarisation de l'onde ou des ondes d'illumination polarisée(s) est circulaire, le rapport

$$\frac{I_{//}(\lambda)-I_{\perp}(\lambda)}{I_{//}(\lambda)-I_{\perp}(\lambda)}$$

étant alors sensiblement le degré de polarisation circulaire de ladite surface.

**4.** Dispositif selon la revendication 1, caractérisé en ce que la polarisation de l'onde ou des ondes d'illumination polarisée(s) est elliptique, le vecteur de Stokes associé à l'une des ondes d'illumination polarisées étant sensiblement le suivant:

$$S = \begin{pmatrix} 1 \\ 1/\sqrt{3} \\ 1/\sqrt{3} \\ 1/\sqrt{3} \end{pmatrix}$$

à un facteur scalaire près, et par une matrice de rotation près autour de l'axe (Oz) de propagation de l'onde, le rapport

$$\frac{I_{//}(\lambda)-I_{\perp}(\lambda)}{I_{//}(\lambda)-I_{\perp}(\lambda)}$$

étant alors sensiblement le degré de polarisation total de ladite surface.

**5.** Dispositif selon l'une des revendications précédentes, caractérisé en ce que les moyens de polarisation (PSG) générant pour chaque onde d'illumination à une longueur d'onde de travail donnée, une seule onde d'illumination polarisée, les moyens de détection (MDET) comprennent une caméra recevant lesdits signaux $W_1(\lambda)$, $W_2(\lambda)$ pour former les images $I_{\perp}(\lambda)$ et $I_{//}(\lambda)$ selon les deux états orthogonaux et le dispositif comprend en outre des moyens de commande (COM) contrôlant les moyens d'analyse (PSA) pour sélectionner l'un ou l'autre des signaux caractéristiques des deux états de polarisation orthogonaux, et pilotant la caméra pour contrôler l'acquisition d'une image selon cet état.

**6.** Dispositif selon l'une des revendications 1 à 4, caractérisé en ce que les moyens de polarisation (PSG) générant pour chaque onde d'illumination à une longueur d'onde de travail donnée, une seule onde d'illumination polarisée, les moyens d'analyse (PSA) comprennent notamment un cube séparateur de polarisation dont chacune des deux voies mesure l'un des deux états de polarisation orthogonaux et les moyens de détection comprennent deux caméras, positionnées sur chacune des deux voies.

**7.** Dispositif selon l'une des revendications 1 à 4, caractérisé en ce que les moyens de polarisation (PSG) générant pour chaque onde d'illumination à une longueur d'onde de travail donnée, deux ondes d'illumination polarisées, de polarisations prédéterminées selon deux états de polarisation orthogonaux, les moyens de détection (MDET) comprennent une caméra recevant lesdits signaux $W_1(\lambda)$, $W_2(\lambda)$ pour former les images $I_{\perp}(\lambda)$ et $I_{//}(\lambda)$ selon les deux états orthogonaux et le dispositif comprend en outre des moyens de commande contrôlant les moyens de polarisation (PSG) pour sélectionner l'une ou l'autre des ondes d'illumination caractéristiques des deux états de polarisation orthogonaux, et pilotant la caméra pour contrôler l'acquisition d'une image selon cet état.

**8.** Dispositif selon l'une des revendications précédentes, caractérisé en ce que la surface dont on cherche à contrôler l'état étant notamment la peau, une longueur d'onde de travail est dans le bleu.

**9.** Dispositif selon l'une des revendications précédentes, caractérisé en ce que les moyens d'émission (SRC) comprennent une source émettant dans une bande spectrale large, en ce que les moyens de polarisation (PSG) de l'onde d'émission et les moyens d'analyse (PSA) de la polarisation sont sensiblement achromatiques sur ladite bande spectrale, et en ce que les moyens de détection (MDET) permettent d'acquérir les images $I_{\perp}(\lambda)$ et $I_{//}(\lambda)$ correspondant aux deux états de polarisation orthogonaux pour un nombre donné de longueurs d'onde ($\lambda$).

**10.** Dispositif selon la revendication 9, caractérisé en ce que ladite bande spectrale étant dans le spectre visible, les moyens de détection (MDET) comprennent des détecteurs (DET) de type caméra vidéo RGB, donnant six images correspondant, pour chacune des longueurs d'onde rouge, vert et bleu, aux deux états de polarisation orthogonaux.

**11.** Dispositif selon la revendication 9, caractérisé en ce que les moyens de détection (MDET) comprennent des détecteurs (DET) de type caméra vidéo monochrome et des moyens de filtrage commandables par des moyens de commande, permettant de sélectionner la couleur à laquelle on souhaite faire la mesure.

**12.** Dispositif selon l'une des revendications précédentes, caractérisé en ce qu'une ou plusieurs longueurs d'onde de travail sont dans le spectre visible, l'image codée obtenue par le calcul du degré de polarisation à l'une desdites longueurs d'onde ou par la somme des degrés de polarisation calculés auxdites longueurs d'onde, mettant ainsi en évidence en outre la brillance de ladite surface, les zones de l'image codée de plus fort degré de polarisation correspondant notamment aux zones de plus grande brillance de la surface aux longueurs d'onde de travail utilisées pour obtenir ladite image codée.

**13.** Dispositif selon la revendication 12, caractérisé en ce qu'il comprend en outre des moyens de comparaison (CMP) des valeurs du degré de polarisation de chaque point de l'image codée à des valeurs de degré de polarisation d'une table de calibration (CAL) préalablement établie, permettant de renseigner quantitativement sur la brillance de chaque point de l'image.

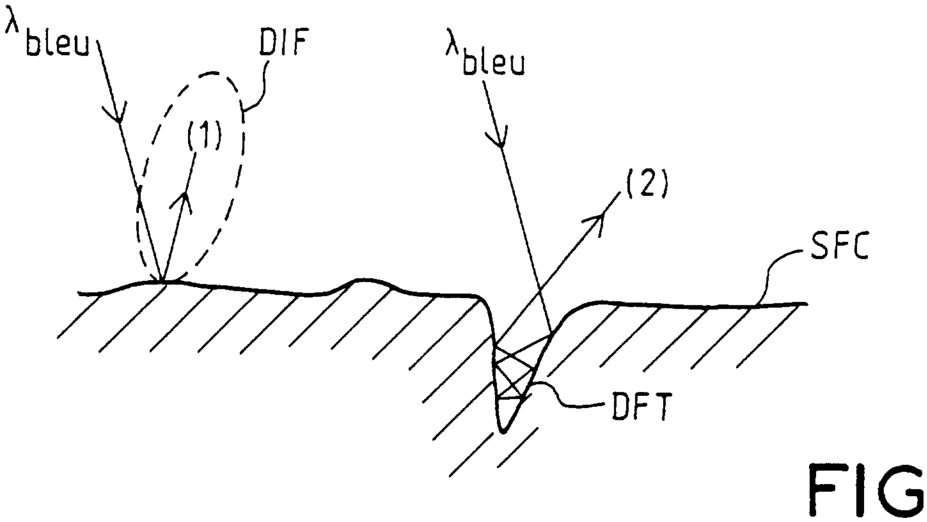


FIG.1A

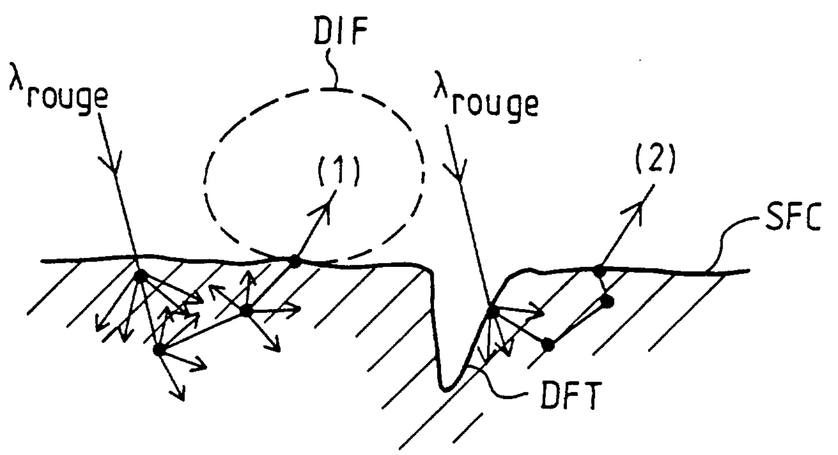


FIG.1B

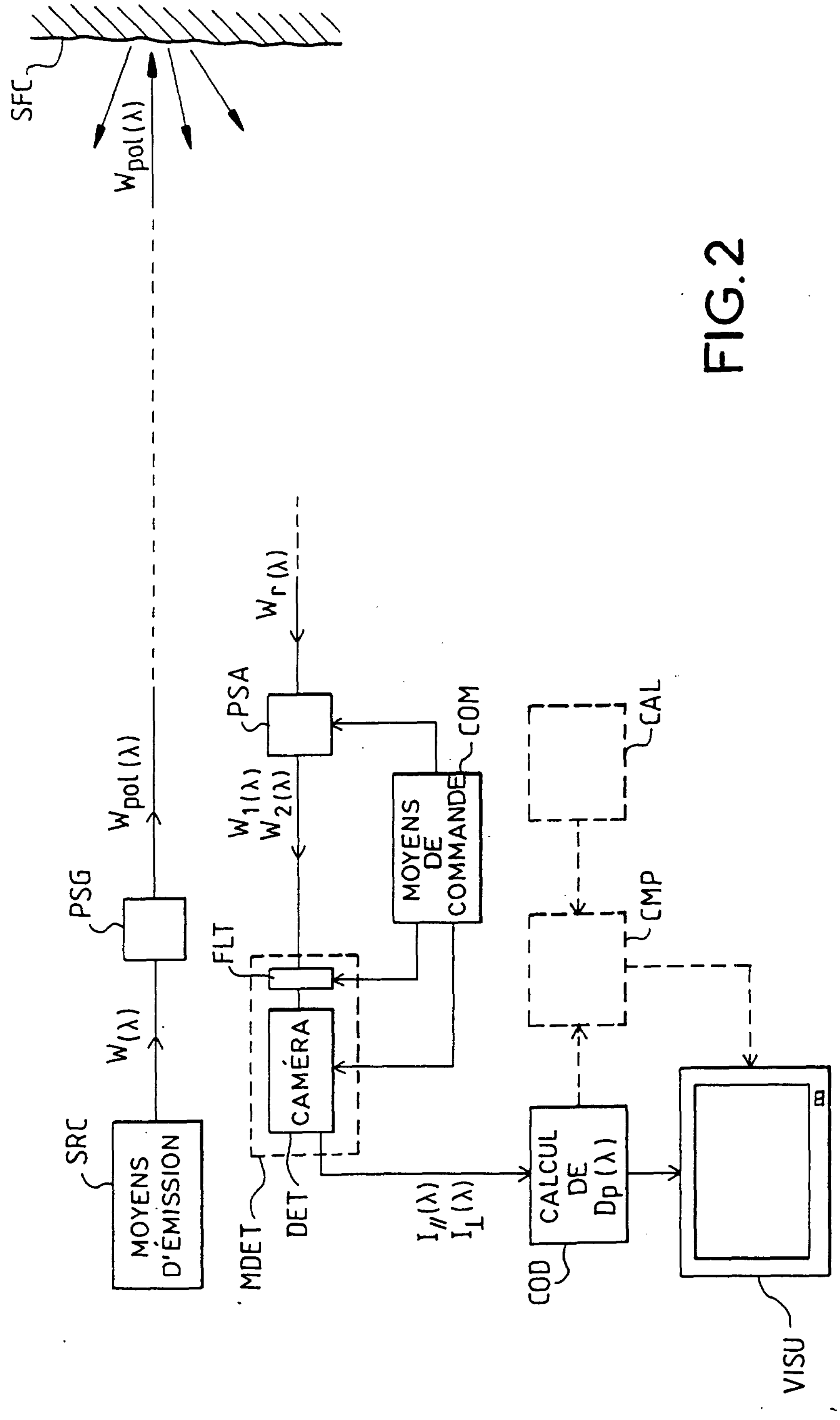
SFC
$W_{pol}(\lambda)$
$W_r(\lambda)$
PSA
COM
CAL
$W_{pol}(\lambda)$
$W_1(\lambda)$
$W_2(\lambda)$
MOYENS DE COMMANDE
PSG
FLT
CMP
$W(\lambda)$
CAMÉRA
SRC
MOYENS D'ÉMISSION
MDET
DET
$I_{//}(\lambda)$
$I_{\perp}(\lambda)$
CALCUL DE $D_p(\lambda)$
COD
VISU

FIG. 2

Office européen des brevets

# RAPPORT DE RECHERCHE EUROPEENNE

Numéro de la demande
EP 01 40 0291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 3 992 571 A (GARLICK GEORGE FREDERICK JOHN ET AL) 16 novembre 1976 (1976-11-16)<br>* abrégé; figure 1 *<br>* colonne 2 *<br>--- | 1 | G01B11/30<br>G01N21/21 |
| A | US 4 873 430 A (JULIANA ANTHONY ET AL) 10 octobre 1989 (1989-10-10)<br>* abrégé; figures 1,2 *<br>--- | 1 | |
| A | US 5 706 088 A (LEE WEN-CHI ET AL) 6 janvier 1998 (1998-01-06)<br>* abrégé; figure 1 *<br>--- | 1 | |
| A | PATENT ABSTRACTS OF JAPAN<br>vol. 017, no. 090 (P-1492),<br>23 février 1993 (1993-02-23)<br>& JP 04 289409 A (FUJITSU LTD),<br>14 octobre 1992 (1992-10-14)<br>* abrégé *<br>----- | 1 | |

DOMAINES TECHNIQUES RECHERCHES (Int.Cl.7)

G01B
G01N

Le présent rapport a été établi pour toutes les revendications

| Lieu de la recherche | Date d'achèvement de la recherche | Examinateur |
|---|---|---|
| BERLIN | 10 mai 2001 | Vorropoulos, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 01 40 0291

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2001

| Document brevet cité au rapport de recherche | Date de publication | Membre(s) de la famille de brevet(s) | Date de publication |
|---|---|---|---|
| US 3992571 A | 16-11-1976 | GB 1472854 A | 11-05-1977 |
| | | DE 2422614 A | 28-11-1974 |
| US 4873430 A | 10-10-1989 | AUCUN | |
| US 5706088 A | 06-01-1998 | AUCUN | |
| JP 04289409 A | 14-10-1992 | JP 2986025 B | 06-12-1999 |

EPO FORM P0460

Pour tout renseignement concernant cette annexe : voir Journal Officiel de l'Office européen des brevets, No.12/82